# EUROPEAN PATENT APPLICATION

(11) **EP 3 653 346 A1**
(43) Date of publication of application: **20.05.2020**
(21) Application number: 18382803.7
(22) Date of filing: 15.11.2018
(51) Int. Cl.: B25J 9/08

(54) **METHOD AND SYSTEM FOR AUTOMATED USER INTERFACE GENERATION AND DYNAMIC UPDATE**

(71) Applicant: Erle Robotics, S.L., 01006 Vitoria-Gasteiz (ES)
(72) Inventor: IBÁÑEZ BURGOS, Carlos, 01006 Vitoria-Gasteiz (ES); BILBAO CALVO, Asier, 01006 Vitoria-Gasteiz (ES); RECIO HERRERO, Igor, 01006 Vitoria-Gasteiz (ES); MUÑIZ ROSAS, Aday, 01006 Vitoria-Gasteiz (ES); USATEGI SAN JUAN, Lander, 01006 Vitoria-Gasteiz (ES); MAYORAL VILCHES, Victor, 01006 Vitoria-Gasteiz (ES)

(57) **Abstract**

The present invention provides a method and system for generating and updating dynamically a user interface for robots furnished with a plurality of components, which are automatically detected by the system. Embodiments of the invention may provide for the employment of information models for discriminating among the different components types and fetching metadata thereof, thereby a user interface adapted to the found components and their type may be automatically generated.

## Description

### Technical Field

The invention relates to the field of robotics and more specifically to a method and system for generating and updating a user interface for displaying robots furnished with different components dynamically.

### Background Art

A quite extended definition of robot is that of actuated mechanism programmable in two or more axes with a degree of autonomy, moving within its environment, to perform intended tasks. Additionally, a note that may be incorporated in said definition is that a robot includes the control system and the interface of the control system.

Programmable robots need to be configured and this setup may be done through the user interface. In addition, robots move according to the programmed paths, thereby the addition of new code is totally conditioned by the user interface's friendliness and by how easily can the user type new orders. Additional options such as user management, safety configuration and many others may be also controlled through the user interface.

Traditional ways of setting up and programming robots included an interface called CLI (Command Line Interface). While its use was not user friendly at all, it could be said that the use of such technology was mainly oriented to experts in the field. Later on, CLIs switched to GUIs (Graphical User Interfaces) where users interact with information by manipulating visual widgets that allow for interactions appropriate to the kind of data they hold. The widgets of a well-designed interface are specifically selected to support the actions necessary to achieve the goals of users.

Thus, an end-user would be setting up and programming the robot through the UI, what means that, in the field of robots composed by different autonomous parts or components (sometimes called modular robots), the constant evolution of devices and the frequent come and go of the parts of the robot, would end in a need of constant development of new adapted Uls.

Therefore, there is a need to reduce the time of the UI development, design and implementation, and to automate the process before the system even reaches the end-user.

### Summary of invention

The present invention relates to a method and system for generating and updating a user interface (UI) by using the information retrieved from a set of identified robot components. Embodiments of the present invention may consider the employment of exemplary information models so that the retrieval of robot components' information structured under said information models allows for a dynamic construction of the system to be displayed through a preferred UI.

More concretely, the present invention consists, on the one hand, of a method, as schematically represented in the accompanying figures, that may comprise a plurality of steps executed by one or more processors under a series of computer instructions causing operations aimed at generating and updating a UI that represents the current state of the operating robot components.

On the other hand, a system furnished for the implementation of the present invention is also provided, said system comprising a robot with at least 1 degree of freedom (DoF), a robot control device or control system (i.e. a robot controller, a PC or any other device capable of controlling the robot) and a touch panel or other device used as a teach pendant where the user interface may be displayed.

### Brief description of drawings

To complement the description that is being made and to aid towards a better understanding of the characteristics of the invention, in accordance with a preferred example of practical embodiment thereof, a set of drawings is attached as an integral part of said description wherein, with illustrative and non-limiting character, the following has been represented:
Figure 1 shows an exemplary robot made up with different working robot components.
Figure 2 shows an exemplary system furnished for the implementation of the present invention.
Figure 3 is a flowchart of the different steps comprised in the disclosed method.
Figure 4 is a representation of an exemplary user interface (UI) comprising different areas according to the information to be shown.
Figure 5 shows a robot manipulator operated in eight joints (two per part) that provide the robot with 8DoF.
Figure 6 is a screenshot of a menu where the kinematics added to the UI are represented, whereby the joint name as well as buttons and sliders for controlling the joints of the robot are comprised.
Figure 7 is a flowchart of the daisy chain topology of 6 components making up a robotic system.
Figure 8 is a schema of an information model (i.e. Hardware Robot Information Model) and the information accessed through said model.

### Description of embodiments

The present invention relates to a method for generating a UI automatically and updating the same dynamically. In some embodiments, the use of information models, such as the Hardware Robot Information Model (HRIM), may be included in the implementation of the invention. According to this, information on robot components structured under said models may allow for a dynamic representation of a robotic system and its display through an exemplary UI.

A robot component, such as an actuator, a sensor or an end-effector, may be furnished with the minimum requirements needed to be a basic computation unit. In some implementations, said robot components may be made by including in their architecture small embedded systems that provide the components with all basic necessary electronics to work autonomously. By means of said minimum requirements, components may be also capable to seamlessly communicate with each other without having to resort to centralized computation. The employment of common communication standards, including robotic middlewares, at a level of exchange layers with information exchange logic between robot applications, may allow components to seamlessly share information in the robotic system and employ said shared information in a convenient way, regardless of the manufacturer and the concrete software employed by the components under consideration.

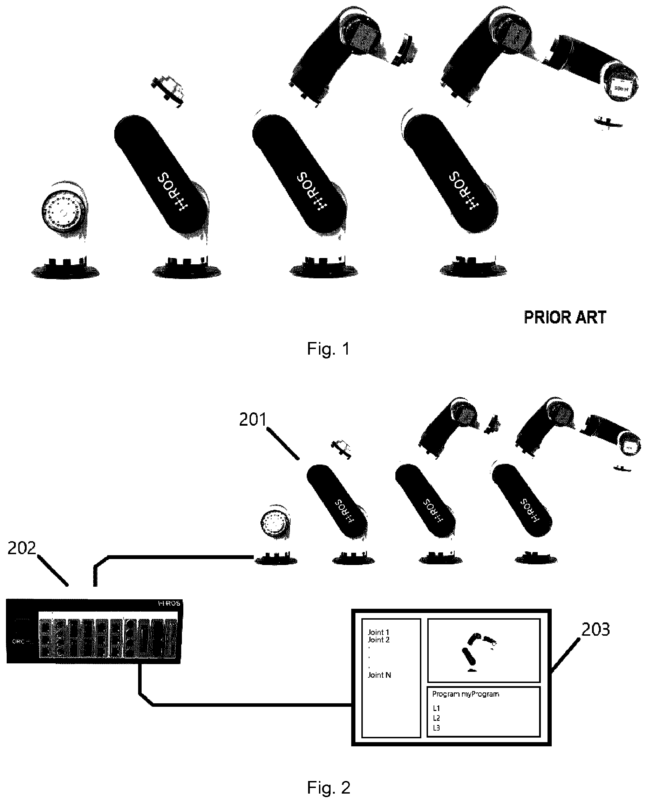

Given the previous definition of component, a robot suitable for implementing the present invention may be the combination of a set of fully functional robot components. As represented in Fig. 1, related to prior art, the minimum number of components that represent an exemplary robot may be two. In such a case, if there were just one degree of freedom (1-DoF), the last of the components may be considered the end-of-arm (e.g. rotary table, linear slider, etc. plus the corresponding end-effector), independently of the logical capabilities or the flexibility of the system itself. Nevertheless, in some implementations, only one robot component (e.g. an actuator) may be integrated into a system where just a further component (e.g. the robot controller) may exist, thereby communication between components happens.

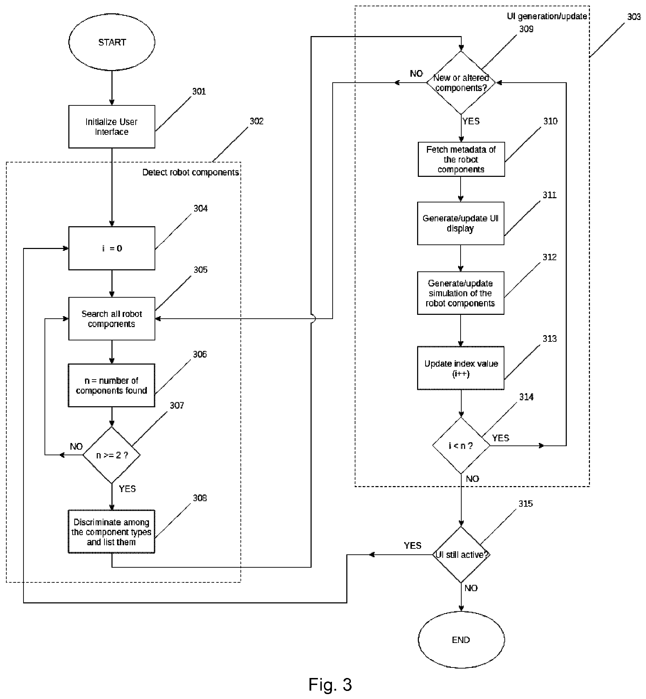

A brief reference is now made to Fig. 2, where a system that may comprise a robotic device (201), a robot controller (202) and a teach pendant (203) is represented; said system furnished to run, through a teach pendant (203), a UI according to the method hereby disclosed, as schematically shown in Fig. 3. For the purpose of the present invention, a teach pendant may be considered to be any electronic device independent from the controller with a display that works as input/output hub for interacting with the physical world. Likewise, said electronic device may be a handheld device, whereas the display and the processing unit for executing the computer instructions may be placed in different apparatuses, thereby the system including distributed control devices. Likewise, for the purpose of the present invention, the devices comprised in the described system may be furnished with one or more processors and store computer instructions in memory, so that, when said computer instructions are executed, cause operations for the deployment of the method hereby disclosed.

In some embodiments, the method may start with a user interface initialization (301), which may include running by one or more processors computer instructions causing the generation of the visual representation of the UI. In some embodiments, the system may firstly provide an option to enable or disable the view of the programming code of the components to be load, but no graphical representation of same.

Subsequently, the disclosed method may provide two main actions: robot components detection (302) and UI generation/update (303). On one side, a variable 'i' may be defined and initialized to '0' (304). According to following implementations, such variable may be used as an index for processing the information of the identified components that will be gathered from the network. On the other side, the detection (302) may comprise searching all robot components (305) connected to the network. In some embodiments, the running robot components may start publishing data whereas the UI program may search for components in the data stream.

The following processes ranging from searching robot components to checking if there are new robot components or if any of the already existing components is not working as it was before or is altered (change of state) may be carried out in a loop (305, 309). The robot component detection (305) may be achieved through different ways, one of them may be the identification of topics. The components, depending on their purpose, may have different topics to subscribe to (e.g. a camera may have the topic 'image_raw' and a gripper may have the topic 'goal'). Therefore, checking the submitted topics of the different components may provide the information required to identify the components making up a robotic system.

Another option for identifying the components may be to check the metadata of the device purpose, whereas the device purpose may be defined as essential information about the component thereof, such as a 3D CAD model or the dimensions of the component. These elements may define the basic information that allows the user to work with the components. Consequently, checking the metadata of the device purpose may also be handy in place to identify the different components that may be interconnected in a network at a given time.

Once the search is over, an integer number equal to the number of present components may be stored as a variable 'n', understood as the number of components found (306) in the network. According to further implementations, such variable may be used to check the definition of robotic device according to the number of available components (307). For example, if 'n' is greater than 2, the UI program may be configured to discriminate and list the components found, as well as their type (308), whereas a search may be refreshed if n<2 since no robot has been detected.

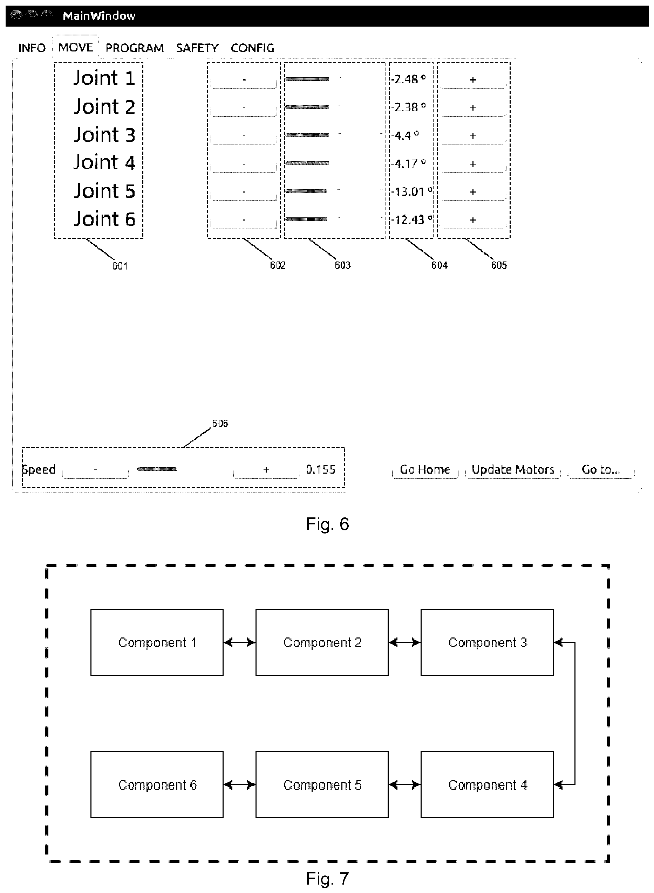

The distinction of the types may allow the UI program to generate the graphical section with the proper controls, adapted to a particular use case. For example, for a sensor, values may be displayed, while a gripper control may show buttons for opening and closing a jaw; and for controlling motors, the controls may be a slider, buttons for controlling the movement and a display for the current position, as shown in Fig. 6.

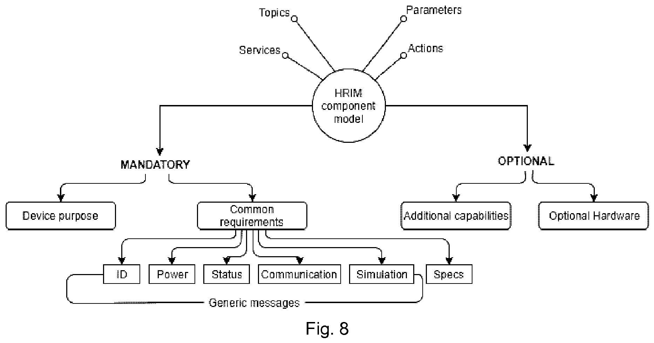

In some embodiments, the employment of an information model such as the HRIM, as schematically represented in Fig. 8, may aid to implement type discriminations (308) by basing on the topic collection of each component as components may be furnished with a unique collection of topics that may define their specific properties. A topic collection may include, as shown in Fig. 8, information such as ID, power, status, communication, simulation, specs and device purpose, among others.

Further to Fig. 3, once components types are shortlisted, the UI may be generated or updated (303), according to a second main action within the disclosed method. The UI generation may start with a check of the list in order to determine if there are new or altered components (309). In other words, this step is aimed to check if there are not displayed components (e.g. new connected components) or if the status of the already displayed is the same, in which case a new search may be performed (305) until relevant results arise, thereby completing the loop (305, 309). On the contrary, if a new component or a different status is detected, the UI program may fetch certain metadata of the robot components (310). Such metadata may comprise graphical information (i.e..STL format files or any other low weighted format alike) of each running component. The 3D visualization may be displayed in the graphical display area (403) and the representation may be facilitated by the use of visualization libraries whose examples may include but are not limited to OpenGL or VTK, among others. Additionally, for the simulation of the inverse kinematics as the execution of already stored programs, applications such as Gazebo in combination with said visualization libraries may be employed to display the simulation in said graphical area (403).

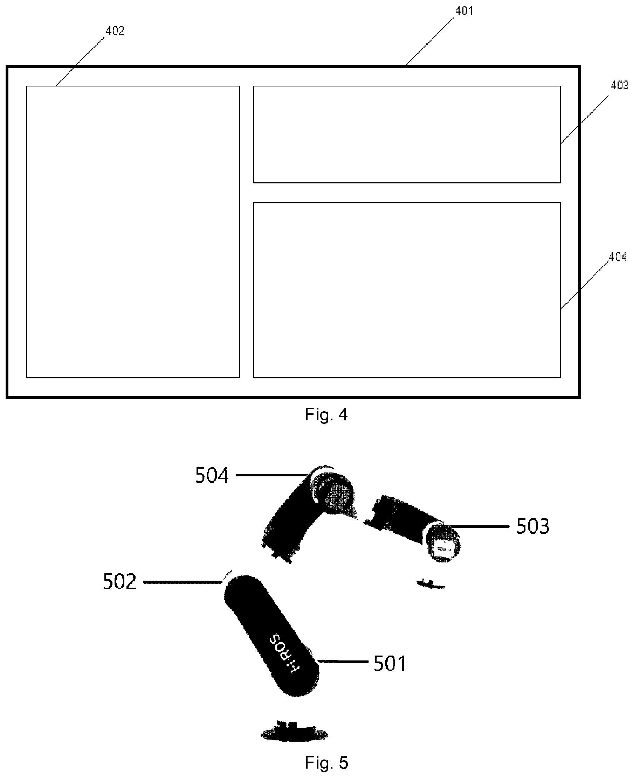

In order to generate or update a UI display (311) as well as the simulation of the robot components (312), different aspects are systematically referred hereinafter with reference to corresponding Figs. 4 to 7. In some embodiments, the UI may display specific information regarding each component. By way of example and not limitation, Fig. 6, which is a subset of the UI (401) included in a specific display area (402), provides a screenshot where, for each joint of the robot, the given name (601), a slider (603), left (602) and right (605) buttons for moving the joints freely, as well as the current position (604) of such, expressed in degrees, may be shown. A further slider (606) allowing the user to modify the speed of the components may also be provided. As the UI generation is dynamic (305, 309) the layout items shown in an exemplary user interface may vary depending on the elements processed (308). Therefore, each time that the IU program detects a new component or a status change (309), the layout display routine may be newly run after fetching the metadata of the robot components (310).

As the 3D environment is an important part of every UI, an additional graphical area where the robot is displayed (403) may also be provided. Such 3D environment may allow the user to seamlessly teach the behavior path of the robot while checking the current position seamlessly. Accordingly, during the generation or update of the simulation of the robot components (312), the UI may feed this display area with the metadata retrieved from every component (310). Likewise, each time the UI program gets information from the list done after the discrimination of components types (308), it may be necessary to update the 3D representation in order to likewise update the control. Additionally, running components may be updated, added or removed in every cycle (305, 309).

In order to facilitate an accurate representation, it may be necessary to provide, alongside the retrieved 3D models, the relative position of each component. Said relative position may be discovered by means of daisy chain topologies, as shown in Fig. 7, whereby components are connected one another not closing the loop. By using this topology, all the nodes may know whom are connected to, that is, the node that goes immediately after and before. This way, when they receive a message with a different recipient address, the nodes may just send over the message to the next node until it reaches the correct recipient.

In some embodiments, working with this topology may imply having all components connected. Although, at a network level, all components may have the others identified, it may be also necessary to identify the relative position of each component individually. For that, the Time to Live (TTL) mechanism may be employed. By means of TTL mechanisms, it may be provided a base sender in the robot controller which may send messages to the different robot components alternatively. As the system is informed on the number of 'hops' that have been executed between the sender and the receiver of the message, the relative position of each robot component may be figured out as components more distant from the base require more 'hops' than nearer ones. Therefore, in some embodiments, the relative position of all components may be mapped by means of a TTL mechanism.

However, in the case that the specific physical connection of the component does not allow a daisy chain topology, another solution may involve employing inertial measurement units (IMUs), which are electronic devices that measure and report the specific force and angular rate of a body through a combination of accelerometers and gyroscopes. Additionally, IMUs may be microelectromechanical systems (MEMs), in accordance with the physical size of the IMUs thereof. With an IMU placed in each component, if every joint is moved and the corresponding IMU tracked, the movement of the IMUs may reveal the relative position of each component. In a preferred embodiment of the invention, the relative position may be mandatory to place the 3D model of the component in the 3D environment display area (403) and to provide each component with an identification (601) that may coincide with the order in which they were discovered in the physical robotic device, as shown in Fig. 5, where a robot manipulator with four parts operated in eight joints is represented. Accordingly, an exemplary discover may include a part W, including joints 1 and 2 (501); a part X, including joints 3 and 4 (502); a part Y, including joints 5 and 6 (503); and a part Z, including joints 7 and 8 (504), wherein the set WXYZ is the representation of a given robot with 8DoF, including both the 3D models and the relative position of each component.

Further to Fig. 3, as a variable 'i' (or index for processing the list with the identification of each of the components) may be assumed to have been defined and initialized to '0' (304) in a previous stage, after each of the discovered components have been processed and shown in the UI (403), the index is updated accordingly for each component through the value of the variable 'i' being incremented in 1 unit (i.e. i++) (313), thereby it may be verified that, for each 'n' component listed beforehand, at least one 'i' component has actually been incorporated to the index. Therefore, while the value of the 'i' variable may keep being smaller, i<n (314) than the number of components found (306), the UI program may check if there are new or altered components again (309), whereas if, otherwise, the value of the 'i' variable results being greater or equal to the number of components found (306), that is, if the value is not i<n, the loop for checking the list (309, 314) may finish, thereby concluding with the UI generation or update.

In a last aspect of the disclosed method, the program of a successfully generated UI may be configured to stop the operations by determining, in some embodiments, if the UI is still active (315), bringing the actions back to initialize the variable 'i' or index (304). In other embodiments, the user himself may quit the program manually.

## Claims

1. A method for generating a user interface for robots furnished with a plurality of components, the method **characterized by** the execution, on one or more processors, of computer instructions causing operations comprising: initialize a user interface (301); detect robot components (302) and generate and update the user interface (303); wherein the method is further **characterized by** the automatic search of components present in the network (305); by the employment of an information model allowing discriminating and listing components types (308); and by fetching metadata directly of the robot components (310) for generating and updating a user interface display (311) and a simulation of the robot components (312).

2. A method for generating a user interface for robots furnished with a plurality of components according to claim 1, wherein the detection of robot components (302) is **characterized by** comprising: defaulting to '0' an index 'i' value (304); searching robot components in the network (305); assigning to variable 'n' the number of found robot components (306); checking that the value of 'n' is greater than 2 (307) and discriminating among the components types and listing the types thereof (308).

3. A method for generating a user interface for robots furnished with a plurality of components according to claims 1 and 2, wherein the generation and update of the user interface (303) is **characterized by** comprising: checking if there are new or altered components (309), wherein no new or altered components implies searching robot components (305); fetching metadata of the robot components (310), generating and updating a user interface display (311); generating and updating a simulation of the robot components (312); updating the index 'i' value (313); and checking if the value of the index is smaller than the number 'n' of found components (314), wherein a smaller value determines repeating the UI generation/update (303) for each component and an equal or greater value determines finishing the UI generation/update (303).

4. A method for generating a user interface for robots furnished with a plurality of components according to any of the previous claims, wherein the information model defining the discrimination and listing of components types (308) and the fetching of metadata of robot components (310) is the Hardware Robot Information Model (HRIM).

5. A system for generating a user interface for robots furnished with a plurality of components, the system **characterized by** hardware comprising a robotic device (201), a robot controller (202) and a teach pendant (203), wherein the system further comprises the execution, on one or more processors, of computer instructions causing operations comprising: initialize a user interface (301); detect robot components (302) and generate and update the user interface (303); wherein the method is further **characterized by** the automatic search of components present in the network (305); by the employment of an information model allowing discriminating and listing components types (308); and by fetching metadata directly of the robot components (310) for generating and updating a user interface display (311) and a simulation of the robot components (312).

6. A system for generating a user interface for robots furnished with a plurality of components according to claim 5, wherein the detection of robot components (302) is **characterized by** comprising: defaulting to '0' an index 'i' value (304); searching robot components in the network (305); assigning to variable 'n' the number of found robot components (306); checking that the value of 'n' is greater than 2 (307) and discriminating among the components types and listing the types thereof (308).

7. A system for generating a user interface for robots furnished with a plurality of components according to claims 5 and 6, wherein the generation and update of the user interface (303) is **characterized by** comprising: checking if there are new or altered components (309), wherein no new or altered components implies searching robot components (305); fetching metadata of the robot components (310), generating and updating a user interface display (311); generating and updating a simulation of the robot components (312); updating the index 'i' value (313); and checking if the value of the index is smaller than the number 'n' of found components (314), wherein a smaller value determines repeating the UI generation/update (303) for each component and an equal or greater value determines finishing the UI generation/update (303).

8. A system for generating a user interface for robots furnished with a plurality of components according to any of the claims 5 to 8, wherein the information model defining the discrimination and listing of components types (308) and the fetching of metadata of robot components (310) is the Hardware Robot Information Model (HRIM).
